# EUROPEAN PATENT APPLICATION

(11) **EP 4 360 517 A1**
(43) Date of publication of application: **01.05.2024**
(21) Application number: 23205401.5
(22) Date of filing: 24.10.2023
(51) Int. Cl.: A47J 42/10

(54) **BURR GRINDER**

(30) Priority: 24.10.2022 CN 202222808977 U
(71) Applicant: Ningbo Chefshere Kitchen Technology Co., Ltd, Ningbo, Zhejiang 315000 (CN)
(72) Inventor: Zhang, Chao, Ningbo, 315000 (CN)
(74) Representative: karo IP

(57) **Abstract**

The present disclosure provides a burr grinder, which relates to the technical field of grinders and comprises a outer grinder and a grinding core. The grinding core is rotatably matched in the outer grinder; the inner wall of the outer grinder is provided with an inner grinding layer, and the outer wall of the grinding core is provided with a corresponding outer grinding layer; a gap between the inner grinding layer and the outer grinding layer constitutes a grinding channel; the size of the grinding channel is decreased successively from a feeding place to a discharge place, and is successively divided into a crushing region, a coarse grinding region, a medium grinding region and a fine grinding region; and the crushing region, the coarse grinding region, the medium grinding region and the fine grinding region are distributed along the generatrix of the grinding core. The burr grinder increases the discharge speed while ensuring the grinding fineness. Moreover, the grinding is smooth and the grinding channel is difficult to cause blockage. The burr grinder has simple structure, low production cost and strong practicality.

## Description

### Technical Field

The present disclosure relates to the technical field of grinders, and more particularly relates to a burr grinder.

### Background

In daily life, the original shapes of seasonings such as pepper, Sichuan pepper, coarse salt, etc. are blocks or granules. However, many dishes often use powdered seasonings to achieve better flavor, so there are ground powdered seasoning products on the market for people to directly purchase and use. Although it is very convenient to use, the powdered seasonings have short storage time, easy dampening, easy caking, and easy loss of flavor, thereby affecting the taste. Therefore, with the continuous development of the industrial technology, a variety of grinders have emerged. The grinders can be used for people to grind the seasonings from their original shapes into powder in real time when cooking food, so as to preserve the best flavor of the seasonings and improve the happiness of people when dining.

The grinder generally comprises a hopper bin for holding particles and a burr grinder arranged at the end of the hopper bin. The burr grinder generally comprises a grinding core and a outer grinder. The outer grinder is an annular structure, and the inner wall is provided with grinding teeth. The grinding core is arranged in the outer grinder and can rotate relative to the outer grinder. Of course, the outer wall of the grinding core is also provided with grinding teeth corresponding to the outer grinder. Generally speaking, the grinding teeth are designed to be a progressive step structure from coarse to fine, to ensure the fineness of grinding, but there are still many problems in this structure.

For example, the patent with publication number CN201806571U provides a particle burr grinder, which comprises a male burr and a female burr which are matched for grinding granular food. The male burr is rotatably matched and sleeved in a grinding chamber of the female burr, and the male burr and the female burr are matched to form a crushing region, grinding regions and a fine grinding region in sequence, and constitute a section progressive step structure of continuous grinding. The inner wall of the grinding chamber is provided with an inner grinding layer for grinding, and correspondingly, the outer wall of the male burr is provided with an outer grinding layer matched therewith. In the disclosure, three grinding regions are installed, and arranged in step structure, so that the discharge speed of the ground food is reduced and not smooth enough. In addition, the fine grinding region adopts the principle of stone grinding to make the ground particles as small as possible, but as can be seen from the figure, the length of the fine grinding region is long and the angle is relatively gentle, so that the discharge speed of the ground powder is very slow, and it is also prone to blockage. At the same time, the structure of the fine grinding region makes it more difficult to process and manufacture, and difficult to guarantee the accuracy of processing and assembly, causing high scrap rate and increasing production cost.

### Summary

Aiming at the problems of low discharge speed and easy blockage of the burr grinder in the prior art, the present disclosure provides a burr grinder which is capable of increasing the discharge speed while ensuring the grinding fineness and difficult to cause obstructions.

A technical solution adopted to solve the above technical problems in the utility model is as follows:
Aburr grinder comprises a outer grinder and a grinding core; the grinding core is rotatably matched in the outer grinder; the inner wall of the outer grinder is provided with an inner grinding layer, and the outer wall of the grinding core is provided with a corresponding outer grinding layer; a gap between the inner grinding layer and the outer grinding layer constitutes a grinding channel; the size of the grinding channel is decreased successively from a feeding place to a discharge place, and is successively divided into a crushing region, a coarse grinding region, a medium grinding region and a fine grinding region; and the crushing region, the coarse grinding region, the medium grinding region and the fine grinding region are distributed along the generatrixof the grinding core.

In some embodiments, the outer grinding layer of the grinding core located on the crushing region is provided with a spiral feed chute, the depth of the feed end of the feed chute is greater than the depth of a discharge end, and the width of the feed end of the feed chute is less than the width of the discharge end.

In some embodiments, the inner grinding layer of the outer grinder located on the crushing region is provided with a guide chute matched with the feed chute, and the guide chute is spiral.

In some embodiments, the inner grinding layer of the outer grinder located on the coarse grinding region is provided with spiral coarse grinding teeth, and the tooth width of the coarse grinding teeth at a place corresponding to the guide chute is greater than the other tooth widths.

In some embodiments, the outer grinding layer of the grinding core located on the coarse grinding region is provided with coarse grinding tooth grooves matched with the coarse grinding teeth; the coarse grinding tooth grooves are spiral; and the width of the feed ends of the coarse grinding tooth grooves is greater than the width of the discharge end.

In some embodiments, the inner grinding layer of the outer grinder located on the medium grinding region is provided with spiral inner tooth lines, and the outer grinding layer of the grinding core located on the medium grinding region is provided with outer tooth lines matched with the inner tooth lines.

In some embodiments, the outer grinding layer of the grinding core located on the fine grinding region is provided with an outer fine grinding plane, and the inner grinding layer of the outer grinder located on the fine grinding region is provided with an inner fine grinding plane.

In some embodiments, the grinding channel further comprises a micro grinding region; the micro grinding region is connected with the fine grinding region; and the length of the micro grinding region is less than half the length of the fine grinding region.

In some embodiments, an angle between the plane where the micro grinding region is located and a horizontal plane is 0-5°.

In some embodiments, the bottom surface of the outer grinder is arranged as an inner micro grinding plane; the bottom of the grinding core is provided with a radial ledge; the upper surface of the radial ledge is arranged as an outer micro grinding plane; and the inner micro grinding plane and the outer micro grinding plane constitute the micro grinding region.

Compared with the prior art, the burr grinder provided by the present disclosure is provided with the crushing region, the coarse grinding region, the medium grinding region and the fine grinding region from coarse to fine, which can ensure the fineness of grinding to a great extent. Meanwhile, the crushing region, the coarse grinding region, the medium grinding region and the fine grinding region are located on the same straight line so that the discharge is very smooth and not easy to block, and the discharge speed is also greatly increased. Moreover, the burr grinder has simple structure, reduces the processing difficulty, improves the rate of finished products and reduces the production cost.

### Description of Drawings

The present disclosure will be further described below in detail in combination with the drawings and preferred embodiments. However, those skilled in the art will understand that the drawings are only drawn for the purpose of explaining the preferred embodiments, and thus shall not be taken as a limitation to the scope of the present disclosure. In addition, unless otherwise specified, the drawings only schematically illustrate the composition or structure of the described object and may include exaggerated displays, and the drawings are not necessarily drawn to scale.
Fig. 1: a structural schematic diagram of embodiment 1 of a burr grinder provided by the present disclosure;
Fig. 2: a top view of embodiment 1 of a burr grinder provided by the present disclosure;
Fig. 3: a sectional view along the A-A line in Fig. 2;
Fig. 4: a sectional isometric view of a outer grinder in embodiment 1 of a burr grinder provided by the present disclosure;
Fig. 5: a structural schematic diagram of a grinding core in embodiment 1 of a burr grinder provided by the present disclosure;
Fig. 6: a top view of embodiment 2 of a burr grinder provided by the present disclosure;
Fig. 7: a sectional view along the B-B line in Fig. 6;
Fig. 8: a structural schematic diagram of a grinding core in embodiment 2 of a burr grinder provided by the present disclosure;
Fig. 9: an exploded view of embodiment 2 of a burr grinder provided by the present disclosure;

Wherein 1 outer grinder; 2 grinding core; 21 radial ledge; a crushing region; b coarse grinding region; c medium grinding region; d fine grinding region; e micro grinding region; a1 guide chute; b1 coarse grinding tooth; c1 inner tooth line; d1 inner fine grinding plane; e1 inner micro grinding plane; a2 feed chute; b2 coarse grinding tooth groove; c2 outer tooth line; d2 outer fine grinding plane; e2 outer micro grinding plane.

### Detailed Description

The present disclosure is described in detail below in combination with the drawings.

To make the purpose, the technical solution and the advantages of the utility model more clear, the present disclosure will be further described below in detail in combination with the drawings and the embodiments. It should be understood that specific embodiments described herein are only used for explaining the present disclosure, not used for limiting the present disclosure.

It should be understood for those skilled in the art that in the utility model, terms such as "longitudinal", "transverse", "upper", "lower", "front", "rear", left", "right", "vertical", "horizontal", "top", "bottom", "inner", "outer", etc. indicate direction or position relationships shown based on the drawings, and are only intended to facilitate the description of the utility model and the simplification of the description rather than to indicate or imply that the indicated device or element must have a specific direction or constructed and operated in a specific direction, and therefore, the above terms shall not be understood as a limitation to the utility model.

### Embodiment 1:

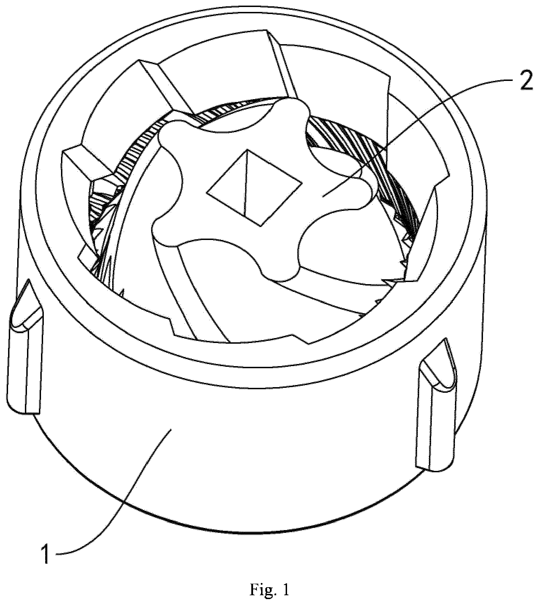

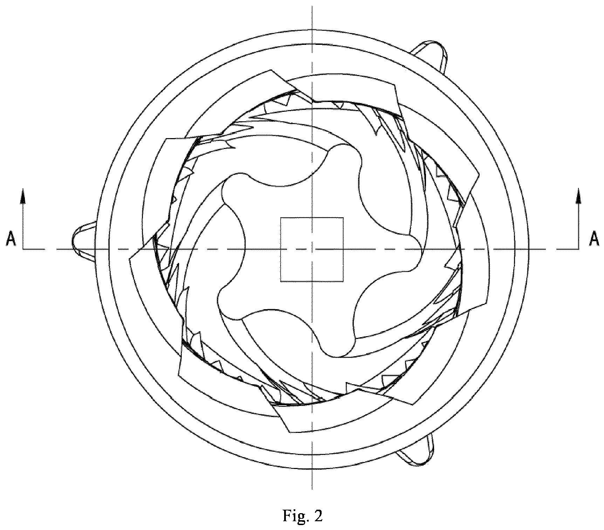

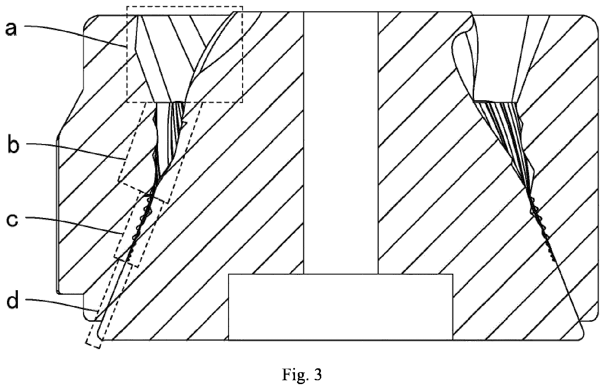

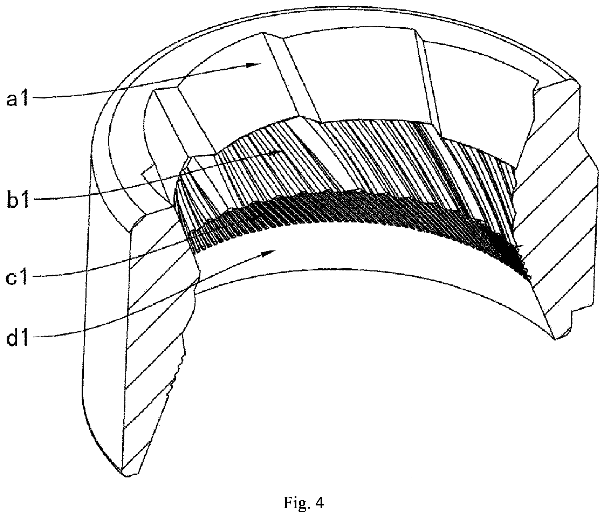

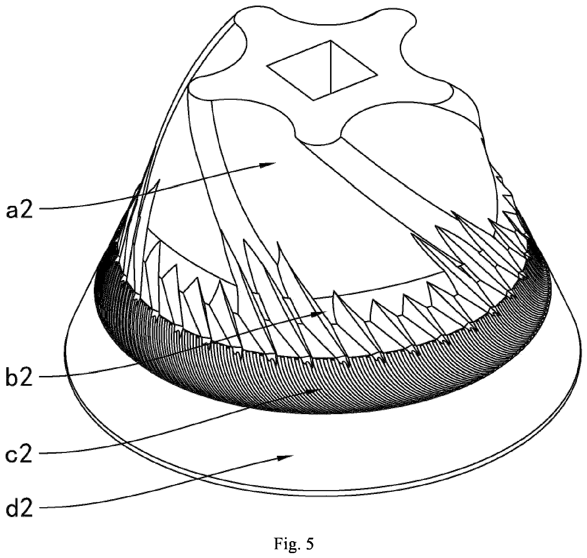

As shown in Fig. 1 to Fig. 5, the present disclosure provides a burr grinder, which comprises a outer grinder 1 and a grinding core 2. The outer grinder 1 is an annular structure. The grinding core 2 is arranged in the outer grinder 1, and the grinding core 2 can rotate relative to the outer grinder 1. The inner wall of the outer grinder 1 is provided with an inner grinding layer, and the outer wall of the grinding core 2 is provided with a corresponding outer grinding layer; a gap between the inner grinding layer and the outer grinding layer constitutes a grinding channel; the size of the grinding channel is decreased successively from a feeding place to a discharge place, and is successively divided into a crushing region a, a coarse grinding region b, a medium grinding region c and a fine grinding region d from the feeding place to the discharge place; the basic shape of the grinding core is a circular truncated cone; and the crushing region a, the coarse grinding region b, the medium grinding region c and the fine grinding region d are distributed along the generatrixof the grinding core. Specifically, as shown in Fig. 3, according to the section cutting plane of the outer grinder 1, the grinding channel composed of the crushing region a, the coarse grinding region b, the medium grinding region c and the fine grinding region d is distributed along the generatrixof the grinding core in a straight line. Thus, the grinding process of particles from the feed to the discharge is very smooth, and the discharge speed of the linear grinding channel is significantly increased compared with a stepped grinding channel. In addition, the burr grinder structure reduces the difficulty of processing and assembly, improves the rate of finished products in production, and reduces the cost.

It can be understood that the outer grinder 1 may also be called a female burr grinder, and the grinding core 2 may also be called a male burr grinder.

It should be noted that the generatrix is a geometric term. A surface figure can be regarded as the trajectory of a moving line during movement, and the moving line that forms a surface is called the generatrix. For example, the circular truncated cone, a cone and a cylinder belong to surface figures with generatrix, and the circular truncated cone is formed by rotating a right trapezoid by 360° by taking the waist of the right trapezoid perpendicular to the bottom edge as the axis. The waist of the rotating right trapezoid that is not perpendicular to the bottom edge is called the generatrix of the circular truncated cone.

Further, the outer grinding layer of the grinding core 2 located on the crushing region a is provided with a spiral feed chute a2; the outer grinding layer of the grinding core 2 located on the crushing region a is arranged as a spiral toothed structure; the feed chute a2 is arranged at the tooth groove; the depth of the feed end of the feed chute a2 is greater than the depth of a discharge end, and the width of the feed end of the feed chute a2 is less than the width of the discharge end. Thus, the capacity of the feed end of the crushing region is larger; more particles can be held at one time; and the feed speed is higher. It can be understood that the depth and the width of the feed chute a2 are the depth and the width of the tooth groove.

Further, the outer grinding layer of the grinding core 2 located on the coarse grinding region b is provided with spiral coarse grinding tooth grooves b2, and the width of the feed end of the coarse grinding tooth grooves b2 is greater than the width of the discharge end, so that the material of the crushing region a can enter the coarse grinding region b more smoothly. Moreover, the coarse grinding tooth grooves b2 are arranged at staggered heights. The lower coarse grinding tooth grooves b2 correspond to the feed chute a2, and the higher coarse grinding tooth grooves b2 correspond to the teeth between two feed chutes a2, so that the coarse grinding region b is better connected with the crushing region a to make the grinding more adequate.

Further, the inner grinding layer of the outer grinder 1 located on the crushing region a is provided with a guide chute a1 matched with the feed chute a2. Specifically, the inner grinding layer of the outer grinder 1 located on the crushing region a is arranged as a spiral ratchet-shaped structure, and the guide chute a1 is arranged at the tooth groove. In addition, the inner grinding layer of the outer grinder 1 located on the coarse grinding region b is provided with coarse grinding teeth b1 corresponding to the coarse grinding tooth grooves b2; the coarse grinding teeth b1 are spiral; and the tooth width of the coarse grinding teeth b1 at a place corresponding to the guide chute a1 is greater than the other tooth widths of the coarse grinding teeth b1. Due to the large capacity at the guide chute a1, the tooth width of the coarse grinding teeth b1 at the place corresponding to the guide chute a1 is arranged to be larger, which can make the material of the crushing region a flow smoothly to the coarse grinding region b and make the grinding more smooth.

Further, the inner grinding layer of the outer grinder 1 located on the medium grinding region c is provided with spiral inner tooth lines c1, and the outer grinding layer of the grinding core 2 located on the medium grinding region c is provided with outer tooth lines c2 matched with the inner tooth lines c1. The width of the feed ends of the inner tooth lines c 1 and the outer tooth lines c2 is roughly the same as the width of the discharge ends, and the inner tooth lines c1 and the outer tooth lines c2 are densely distributed in a long strip. It can be understood that the tooth widths of the crushing region a, the coarse grinding region b and the medium grinding region c are decreased successively, so that the grinding fineness is gradually improved.

Further, the outer grinding layer of the grinding core 2 located on the fine grinding region d is provided with an outer fine grinding plane d2, and the inner grinding layer of the outer grinder 1 located on the fine grinding region d is provided with an inner fine grinding plane d1. The fine grinding region d makes the grinding fineness higher through the rolling between the planes, so as to satisfy the grinding needs of most consumers.

### Embodiment 2:

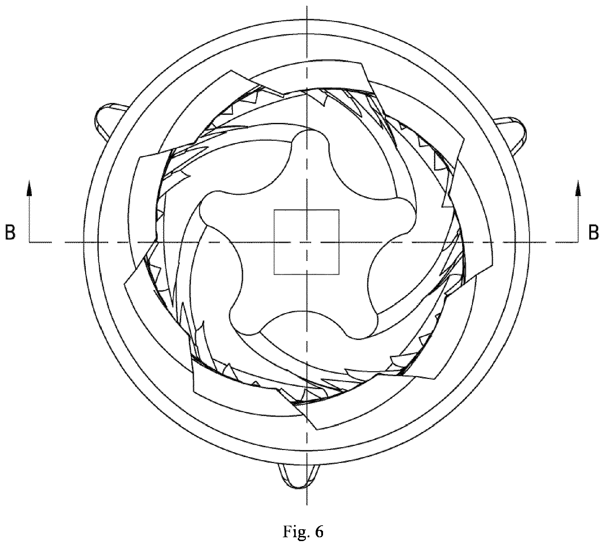

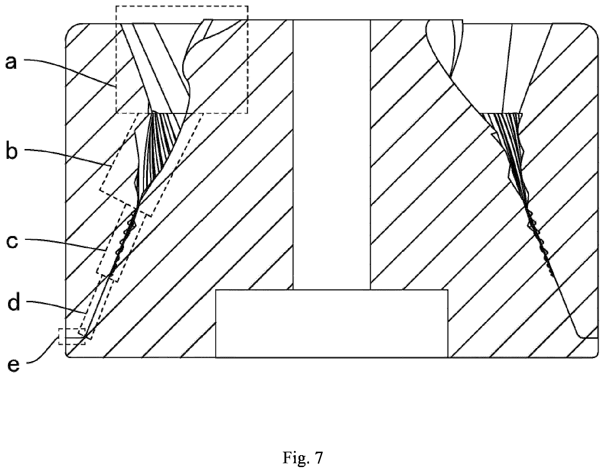

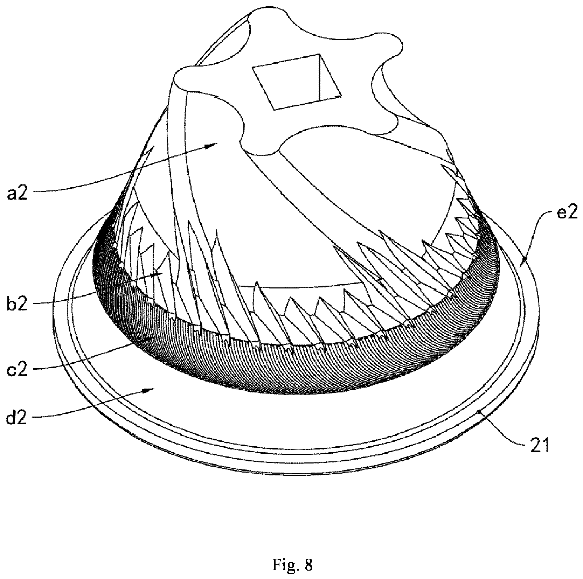

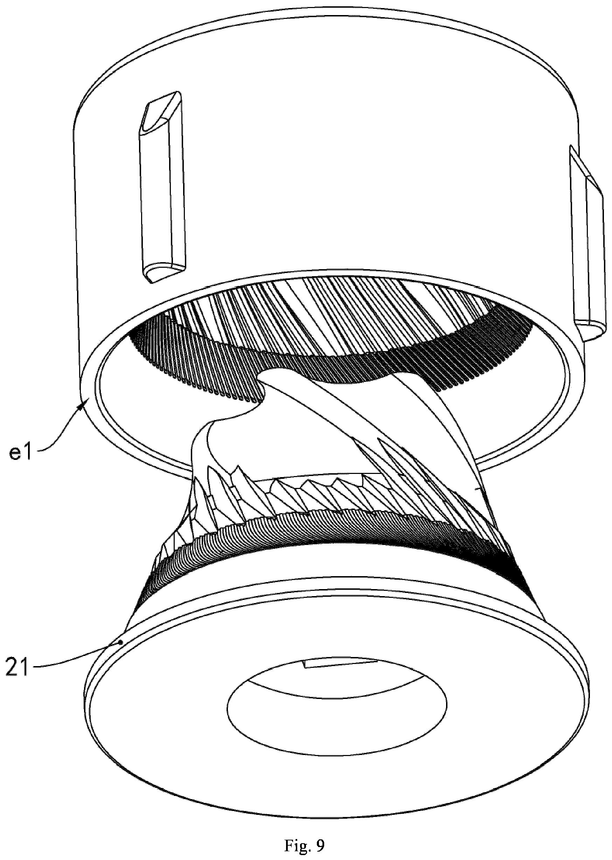

As shown in Fig. 6 to Fig. 9, another burr grinder provided by the present disclosure has the improvement of the addition of the micro grinding region e compared with embodiment 1.

Specifically, the grinding channel further comprises the micro grinding region e; the micro grinding region e is connected with the fine grinding region d; the bottom surface of the outer grinder 1 is arranged as an inner micro grinding plane e1; the bottom of the grinding core 2 is provided with a radial ledge 21; and the upper surface of the radial ledge 21 is arranged as an outer micro grinding plane e2, i.e., the inner micro grinding plane e1 and the outer micro grinding plane e2 constitute the micro grinding region e. Preferably, an angle between the plane where the micro grinding region e is located and a horizontal plane is 0-5°. Further, an angle between a straight line where the micro grinding region e is located and a straight line where the crushing region a, the coarse grinding region b, the medium grinding region c and the fine grinding region d are located is an obtuse angle, so that the discharge speed of grinding in the micro grinding region e is lower than that of the crushing region a, the coarse grinding region b, the medium grinding region c and the fine grinding region d, so that the grinding degree of raw materials in the micro grinding region e is finer, to satisfy the consumers having higher demands for the grinding fineness.

Further, because the micro grinding region e approaches the horizontal plane, the discharge speed is inevitably slowed down. Therefore, in the present embodiment, the length of the micro grinding region e is short, and is less than half the length of the fine grinding region, which compensates for the problem of decrease in the discharge speed caused by the horizontal angle to a certain extent. Moreover, compared with embodiment 1, the solution has better grinding accuracy, no obvious increase in the discharge speed, no obvious increase in the difficulty of processing and assembly, and strong practicability.

Compared with the prior art, the burr grinder provided by the present disclosure increases the discharge speed while ensuring the grinding fineness. Moreover, the grinding is smooth and the grinding channel is difficult to cause blockage. The burr grinder has simple structure, low production cost and strong practicality.

The present disclosure is described in detail above. Specific individual cases are applied herein for elaborating the principle and embodiments of the present disclosure. The illustration of the above embodiments is merely used for helping to understand the present disclosure and the core thought. It should be noted that for those ordinary skilled in the art, several improvements and modifications can be made to the present disclosure without departing from the principles of the present disclosure, and these improvements and modifications shall also fall into the protection scope of claims of the present disclosure.

## Claims

1. A burr grinder, comprising a outer grinder (1) and a grinding core (2), wherein the grinding core (2) is rotatably matched in the outer grinder (1); the inner wall of the outer grinder (1) is provided with an inner grinding layer, and the outer wall of the grinding core (2) is provided with a corresponding outer grinding layer; a gap between the inner grinding layer and the outer grinding layer constitutes a grinding channel; the size of the grinding channel is decreased successively from a feeding place to a discharge place, and is successively divided into a crushing region (a), a coarse grinding region (b), a medium grinding region (c) and a fine grinding region (d); and the crushing region (a), the coarse grinding region (b), the medium grinding region (c) and the fine grinding region (d) are distributed along the generatrix of the grinding core.

2. The burr grinder according to claim 1, wherein the outer grinding layer of the grinding core (2) located on the crushing region (a) is provided with a spiral feed chute (a2), the depth of the feed end of the feed chute (a2) is greater than the depth of a discharge end, and the width of the feed end of the feed chute (a2) is less than the width of the discharge end.

3. The burr grinder according to claim 2, wherein the inner grinding layer of the outer grinder (1) located on the crushing region (a) is provided with a guide chute (a1) matched with the feed chute (a2), and the guide chute (a1) is spiral.

4. The burr grinder according to claim 1, wherein the inner grinding layer of the outer grinder (1) located on the coarse grinding region (b)is provided with spiral coarse grinding teeth (b1), and the tooth width of the coarse grinding teeth (b1) at a place corresponding to the guide chute (a1) is greater than the other tooth widths.

5. The burr grinder according to claim 4, wherein the outer grinding layer of the grinding core (2) located on the coarse grinding region (b )is provided with coarse grinding tooth grooves (b2) matched with the coarse grinding teeth (b1); the coarse grinding tooth grooves (b2) are spiral; and the width of the feed ends of the coarse grinding tooth grooves (b2) is greater than the width of the discharge end.

6. The burr grinder according to claim 1, wherein the inner grinding layer of the outer grinder (1) located on the medium grinding region (c) is provided with spiral inner tooth lines (c1), and the outer grinding layer of the grinding core (2) located on the medium grinding region (c) is provided with outer tooth lines (c2) matched with the inner tooth lines (c1).

7. The burr grinder according to claim 1, wherein the outer grinding layer of the grinding core (2) located on the fine grinding region (d) is provided with an outer fine grinding plane (d2), and the inner grinding layer of the outer grinder (1) located on the fine grinding region (d) is provided with an inner fine grinding plane (d1).

8. The burr grinder according to claim 1, wherein the grinding channel further comprises a micro grinding region (e); the micro grinding region (e) is connected with the fine grinding region (d); and the length of the micro grinding region (e) is less than half the length of the fine grinding region (d).

9. The burr grinder according to claim 8, wherein the bottom surface of the outer grinder (1) is arranged as an inner micro grinding plane (e1); the bottom of the grinding core (2) is provided with a radial ledge (21); the upper surface of the radial ledge (21) is arranged as an outer micro grinding plane (e2); and the inner micro grinding plane (e1) and the outer micro grinding plane (e2) constitute the micro grinding region (e).
